(19) Europäisches Patentamt
European Patent Office
Office européen des brevets

(11) Publication number: **0 351 081 A2**

# (12) EUROPEAN PATENT APPLICATION

(21) Application number: 89306356.0

(22) Date of filing: 23.06.89

(51) Int. Cl.4: C08K 3/22 , C08K 5/36 , C08K 5/34 , C08L 61/06

(30) Priority: 24.06.88 JP 155009/88
24.06.88 JP 155010/88

(43) Date of publication of application:
17.01.90 Bulletin 90/03

(84) Designated Contracting States:
CH DE FR GB IT LI NL

(71) Applicant: MITSUI TOATSU CHEMICALS, Inc.
2-5 Kasumigaseki 3-chome
Chiyoda-Ku Tokyo 100(JP)

(72) Inventor: Katoh, Nobukatsu
128-60, Azaohgatayama Narumicho Midori-ku
Nagoya-shi Aichi-ken(JP)
Inventor: Enomoto, Toshiyuki
6-42, Komachi 2-Chome
Kamakura-shi Kanagawa-ken(JP)
Inventor: Izukawa, Tsukuru
B-43, 55, Mitakane Narumicho Midori-ku
Nagoya-shi Aichi-ken(JP)

(74) Representative: Harvey, David Gareth et al
Graham Watt & Co. Riverhead
Sevenoaks Kent TN13 2BN(GB)

## (54) Phenolic resin molding materials.

(57) A phenolic resin molding material having excellent heat resistance and good mechanical strength at high temperature, comprises a phenolic resin, an oxide of an alkaline earth metal and a sulfur compound. When a specific class of aralkylphenol compounds is incorporated, a remarkable enhancement of these properties can be achieved. Such aralkylphenol compounds can be obtained by reacting a compound of the general formula

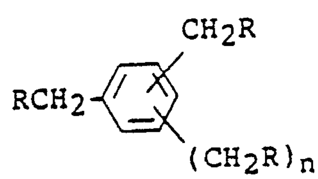

wherein R is selected from the group consisting of an alkoxy group having 1 to 6 carbon atoms, a carboxyl group having 2 to 6 carbon atoms, a chlorine atom, a bromine atom and an iodine atom, and n is 0 or 1, with a phenolic compound.

EP 0 351 081 A2

Xerox Copy Centre

## PHENOLIC RESIN MOLDING MATERIALS

The present invention relates to phenolic resin molding materials, more particularly ones having excellent heat resistance. More specifically, the present invention relates to phenolic resin molding materials having heat resistance as high as that of high performance engineering plastics.

Phenolic resins have been widely used because of their good moldability and low cost, but they cannot satisfy the increasing demand for resins having enhanced heat resistance.

If heat resistance at temperatures where high performance engineering plastics are usually used can be achieved for phenolic resins, another type of heat resistance inherent to thermosetting resins, i.e., instantaneous heat resistance at high temperatures such as 400-500° C will also be present. Consequently, the versatility of such phenolic resins will be superior to that of high performance engineering plastics.

In this regard, the art of phenolic resin molding materials has already been advanced. For example, Japanese Patent Laid-open Publication No. 108459/1985 (corresponding to U.S. Patents Nos. 4,659,758 and 4,725,650) discloses a material comprising a sulfur compound and a rubber which becomes brittle when heated. A molding material which seems to be based on this technique is now marketed under the trade name of Mektal HT-500 (made by Rogers Inc., a U.S. company).

The above-mentioned molding material is believed to be heat-resistance to a temperature of 230° C, which is remarkably improved relative to conventional phenolic resin materials. Although this molding material is expected to increase the applications of phenolic resins, the use of rubber in large quantities in the material, the poor stiffness of the molding material at high temperature, and the release characteristics of molded products are all disadvantageous. In addition, creep properties and mechanical strength of this material tend to deteriorate at high temperature. Apparently, essential characteristics of the phenolic resin component are impaired in this composition.

Furthermore, as heat-resistance is required at ever-increasing temperatures, it is strongly desired that such materials be heat-resistant at temperatures at least 20° C higher.

Moreover, there are disclosed a phenolic resin composition comprising a phenolic resin, hexamethylenetetramine and a dithioate compound (Japanese Patent Laid-open Publication No. 241950/1987); a phenolic resin composition comprising a phenolic resin, hexamethylenetetramine and a sulfeneamide (Japanese Patent Laid-open Publication No. 241952/1987); and a phenolic resin composition comprising a phenolic resin, hexamethylenetetramine and a thiazole (Japanese Patent Laid-open Publication No. 241954/1987). These inventors are concerned with molding materials which can cure at an industrially useful velocity even in a relatively low temperature range, but they do not refer to any improvement in heat-resistance characteristics.

An object of the present invention is to provide phenolic resin molding materials having both excellent heat resistance and mechanical strength.

A second object of the present invention is to provide phenolic resin molding materials whose heat resistance is such that they display desirable bending strength values after exposure to temperatures at least 20° C higher than prior art heat-resistance resins can satisfactorily endure.

The object of the present invention can be achieved by providing phenolic resin molding materials comprising a phenolic resin, an oxide of an alkaline earth metal and a sulfur compound.

The second object of the present invention can be achieved by providing phenolic resin molding materials comprising an aralkylphenolic resin produced by reacting a compound of the general formula (1)

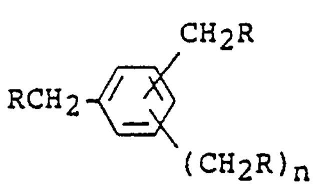

(1)

wherein R is an alkoxy group having 1 to 6 carbon atoms, a carboxyl group having 2 to 6 carbon atoms, a chlorine atom, a bromine atom or an iodine atom, and n is an integer of 0 or 1,
with a phenolic compound, an oxide of an alkaline earth metal and a sulfur compound.

The invention comprehends within its scope methods of making the molding materials defined in the last two paragraphs.

The invention will now be explained in more detail by way of example only, in the following non-limitative description.

Examples of phenolic resins preferred for use in the molding material of the present invention include the novolak-type phenolic resins. Typical examples of such resins include those obtained by reacting (1) phenol; alkyl phenols such as cresol, xylenol, butylphenol, octylphenol and nonylphenol; aralkylphenols such as 2,2-bis(4-hydroxyphenyl)propane, phenylphenol and cumylphenol; and alkenylphenols such as vinylphenol and isopropenylphenol with (2) aliphatic aldehydes such as an aqueous formaldehyde solution, paraformaldehyde, α-polyoxymethylene and β-polyoxymethylene or substituted and non-substituted aromatic aldehydes, in the presence of an acidic or basic catalyst.

With regard to reaction conditions such as the type of acidic or basic catalyst, molar ratio between phenol and formaldehyde and experimental procedure resort may be had to conventional techniques for preparation of phenolaldehyde resins, as are well known to those skilled in the art.

The novolak-type phenolic resin can be prepared by subjecting the phenol (P) and the aldehyde (A) to a reflux reaction in a molar ratio (A/P) ranging from about 0.50 to about 1.0, in the presence of an acidic catalyst, and then passing the reaction product through a dehydration step. On the other hand, the resol type phenolic resin can be prepared by subjecting the phenol (P) and the aldehyde (A) to a reflux reaction in a molar ratio (A/P) ranging from about 1 to about 3.0, placing the phenol formaldehyde aqueous solution and aqueous ammonia in a reactor, then heating and dehydrating the reaction product, and removing the free phenol therefrom.

The oxide of alkaline earth metal used in the present invention is preferably present in an amount of from about 1 to about 10 parts by weight, more preferably from about 2 to about 7 parts by weight based on 100 parts by weight of the phenolic resin. Preferred examples of the alkaline earth metal oxide are magnesium oxide and calcium oxide. Two, or more different alkaline earth oxides can be used in admixture. These oxides also have the effect of improving the stiffness of the molding material at high temperature.

Typical examples of the sulfur compounds used in the present invention include thiazole compounds such as 2-mercaptobenzothiazole, 2,2′-dithiobis(benzothiazole) and 2-(4-morpholinodithio)benzothiazole; thiuram compounds such as tetramethylthiuram disulfide, tetraethylthiuram disulfide, tetrabutylthiuram disulfide and tetramethylthiuram monosulfide; thiazine compounds such as 2,4,6-trimercapto-1,3,5-triazine, 2,4-dimercapto-6-dibutylamino-1,3,5-triazine; sulfeneamide compounds such as N-cyclohexyl-2-benzothiazolylsulfeneamide, N-oxydiethylene-2-benzothiazolylsulfeneamide and N,N-dicyclohexyl-2-benzothiazolylsulfeneamide; and dithioate compounds such as copper dimethyldithiocarbamate and sodium dibutyldithiocarbamate. These sulfur compounds can be used singly or in mixtures of two or more thereof. The sulfur compound is preferably used in an amount of from about 1 to about 7 parts by weight, more preferably from about 2 to about 5 parts by weight, based on 100 parts by weight of the phenolic resin.

In the phenolic resin molding material of the present invention, resorcinol may desirably be used, preferably in an amount from about 1 to about 10 parts by weight based on 100 parts by weight of the phenolic resin. The resorcinol component functions to improve heat resistance and initial strength of the molding material.

The molding material of the present invention may include various additives, if desired. Examples of such additives include fillers, curing agents, curing accelerators, plasticizers, lubricants and pigments, which are conventionally used in phenolic resin molding materials. These additives will typically be used in conventional amounts. The molding material of the present invention can be prepared by classical techniques for production of such compositions, as is well within the skill of those practiced in the art.

Typical examples of the compound of the general formula (1) used to achieve the above-recited second object of the present invention include α,α′-dimethoxy-p-xylene, α,α′-diethoxy-p-xylene, α,α′-dimethoxy-o-xylene, α,α-dimethoxy-m-xylene, α,α′-diacetoxy-p-xylene, α,α-dipropionyloxy-p-xylene, α,α′-diacetoxy-o-xylene, α,α′-diacetoxy-m-xylene, α,α′,α″-trimethoxy-mesitylene, α,α′,α″-triacetoxy- mesitylene, p-xylylene dichloride, p-xylylene dibromide and p-xylylene diiodide. These compound can be used singly or in mixtures of two or more thereof.

The phenolic compound used in the reaction with the compound of the general formula (1) has one or more phenolic hydroxyl groups in its molecule, and examples of this phenolic compound include phenol itself, cresol, xylenols, catechol, resorcinol, p-ethylphenol, p-tert-butylphenol, p-tert-octylphenol, p-nonylphenol, p-phenylphenol, p-aminophenol, naphthols, bis(p-hydroxyphenyl)methane and 2,2-bis(p-hydroxyphenyl)propane. These compounds may be used singly or in mixtures of two or more thereof.

The ratio of the phenolic compound to the compound of the general formula (1) can vary over a wide range, but preferably the molar ratio of the phenolic compound thereto is in the range of about 1.3 to about 3. In the reaction, a catalyst is used, and preferred examples of the catalyst include boron trifluoride, metallic chlorides such as stannic chloride, zinc chloride and ferric chloride, metallic sulfates such as cupric sulfate and sodium bisulfate, dialkyl sulfates such as dimethyl sulfate and diethyl sulfate, sulfuric acid, and p-toluenesulfonic acid.

When the molding material comprises the above-described aralkyl phenolic resin, a novolak-type or resol-type phenolic resin may be substituted for a part of the aralkyl phenolic resin, so long as heat resistance of the resultant composition is not impaired. This novolak-type or resol-type phenolic resin may be prepared by reacting a phenol such as phenol itself, cresol or xylenol with an aldehyde such as formaldehyde, paraformaldehyde, α-polyoxymethylene or β-polyoxymethylene.

Phenolic resin molding materials of the present invention have excellent mechanical strength and stiffness at high temperatures and thus can be used in applications for which conventional phenolic resins are insufficient due to their poor heat resistance. For example, the phenolic resin molding materials of the present invention can be widely used as materials for electric and electronic components, mechanical parts, automobile parts, kitchen articles and the like. Since the phenolic resin molding materials of the present invention do not contain any ingredient having a plasticization effect such as a rubber, the stiffness of the molding material can be maintained at high temperature.

The present invention will now be described in further detail with reference to the following non-limiting examples, which examples are provided solely for purposes of illustration of the invention. The entry "Other Auxiliaries" appearing in Tables I and II hereafter refers to the same ingredients throughout the examples and comparative examples.

Examples 1 to 12

A phenolic resin (made by Mitsui Toatsu Chemicals, Inc.; trade name Novolak #2000; A/P = about 0.8), a curing agent, a sulfur compound, an oxide of an alkaline earth metal, resorcinol and other materials were mixed in the ratios indicated in Table 1 in a blender, and the mixtures were then kneaded by hot rollers at a temperature of from about 80 to about 100 °C. Afterward, the kneaded material was crushed by means of an impact type crusher, thereby producing molding materials.

Test pieces for measuring physical properties were prepared from the above-obtained molding materials under conditions of a mold temperature of 180 °C, an injection pressure of 700 to 800 $kg/cm^2$ and a molding time of 60 seconds, using an IR-45P injection molding machine made by Toshiba Machine Co., Ltd. The thus-prepared test pieces were then postcured at 180 °C for 8 hours, and then were placed in a gear oven which was maintained at a temperature of 250 °C. After a predetermined period of time has elapsed, the test pieces were then taken out therefrom, and bending strength at this time was measured in accordance with JIS K-6911 to determine the time at which the bending strength will have decreased to half its initial value.

Furthermore, the stiffness of the test pieces at high temperature was evaluated as follows: Immediately after molding, each disc-shaped test piece, having a diameter of 50 mm, a thickness of 2 mm and a weight of 9.5 g, was positioned horizontally in a runner, and a weight of 25 g was put on the side of the test piece opposite the secured portion. Afterward, the angle of bending was measured at the region of the secured portion having a rectangular section of 1 mm x 6 mm.

The results of the bending strength and stiffness tests are set forth in Table 1.

Comparative Example 1

A molding material was prepared according to the same procedure set forth above, with the ingredient amounts as shown in Table I, except that no sulfur compound was used. Test pieces of this material were then evaluated according to the same procedure as for Examples 1-12, with the results also being shown in Table I.

Comparative Example 2

This Example was conducted with the same ingredients as in Comparative Example 1. With regard to the commerically available heat-resistant phenolic resin molding material Mektal HT-500 (made by Rogers Inc. in U.S.A.), evaluation was made by the same test procedure as in the above-described examples.

The results are set forth in Table 1.

Examples 13 to 24

Example of Aralkylphenolic Resin Preparation:

Phenol (282 g) and diethylsulfuric acid (0.6 g) were charged to a reaction flask and the mixture heated to 140 °C with stirring. Thereafter, $\alpha,\alpha'$-dimethoxy-p-xylene (332 g) was added dropwise over 2 hours. During this reaction step, the theoretical quantity of methanol was continuously distilled off. The flask temperature was maintained at 140 °C for an additional 1 hour, then was slowly increased to 160 °C and held at this temperature under reduced pressure until the evolution of volatiles had ceased.

The contents of the flask were poured into an aluminum foil tray. On further cooling the resinous product solidified and was then crushed to a coarse powder. The softening point of the resin was found to be 92 °C by the Ball and Ring method.

The above-mentioned aralkylphenolic resin (commercially available from Mitsui Toatsu Chemicals, Inc.; trade name Milex XL-225), a curing agent, a sulfur compound, an oxide of an alkaline earth metal, resorcinol and other materials were mixed in the ratios indicated in Table 2 in a blender, and the mixtures were then kneaded by hot rollers at a temperature of from about 100 to about 120 °C. Afterward, the kneaded material was crushed by means of an impact type crusher, thereby producing a molding material.

Test pieces for measuring physical properties were prepared from the above-obtained molding materials under conditions of a mold temperature of 180 °C, an injection pressure of 700 to 800 kg/cm$^2$ and a molding time of 90 seconds using an IR-45P injection molding machine made by Toshiba Machine Co., Ltd. The thus-prepared test pieces were then postcured at 170 °C for 16 hours, then at 220 °C for 4 hours and further at 250 °C for 4 hours, and then were placed in a gear oven which was maintained at a temperature of 270 °C. In the oven, a heat deterioration test was carried out. After a predetermined period of time had elapsed, the test pieces were then taken out therefrom, and bending strength was then measured in accordance with JIS K-6911 to determine the time at which the bending strength will have decreased to half of its initial value. The results are set forth in Table 2.

Comparative Examples 3-5

Molding materials were prepared according to the same procedure set forth above for Examples 13-24, with the ingredient ratios as indicated in Table II, except that, in the case of Comparative Example 3, no sulfur compound was used, and in the case of Comparative Examples 4 and 5, no alkaline earth metal oxide was used. Test pieces of these materials were then evaluated according to the same procedure as for Examples 13-24, with the results also being shown in Table II.

The results in Table 2 indicate that in the phenolic resin molding material of the present invention, heat resistance is improved remarkably as compared with conventional materials. Incidentally, with regard to the molding material obtained in Example 13, the half-value period for the bending strength at 250 °C was in excess of 4500 hours.

On the other hand, the molding materials prepared in Comparative Examples 3 to 6 by the known techniques do not possess such desirable properties as the materials according to the present invention.

In Comparative Example 6, the commercially available heat-resistant phenolic resin molding material Mektal HT-500 (made by ROGERS INC. in U.S.A.) was tested. In the comparative example, a heat deterioration test was carried out, taking into consideration the fact that the material was a novolak-type phenolic resin, following the same procedure as in the above Examples 13-24, with the exception that the molding time was 60 seconds and postcuring was effected at 180 °C for 8 hours.

Table 1 (I)

| Blend Component (pts. wt.) | | Example | | | | |
|---|---|---|---|---|---|---|
| | | 1 | 2 | 3 | 4 | 5 |
| Novolak #2000 | | 100 | 100 | 100 | 100 | 100 |
| Hexamethylenetetramine | | 15 | 15 | 15 | 15 | 15 |
| Magnesium Oxide | | 5 | 5 | 5 | 5 | 5 |
| Calcium Oxide | | - | - | - | - | - |
| Resorcinol | | 5 | 5 | 5 | 5 | 5 |
| 2-Mercaptobenzothiazole | | 5 | - | - | - | - |
| 2,2′-Dithiobenzothiazole | | - | 5 | - | - | - |
| 2-(4-Morpholinodithio)benzothiazole | | - | - | 5 | - | - |
| Tetramethylthiuram Sulfide | | - | - | - | 5 | - |
| 2,4,6-Trimercapto-1,3,5-triazine | | - | - | - | - | 5 |
| Tributylamino-3,5-dimercaptotriazine | | - | - | - | - | - |
| N-Oxydiethylene-2-benzothiazolylsulfeneamide | | - | - | - | - | - |
| Copper Dimethyldithiocarbamate | | - | - | - | - | - |
| Glass Fiber | | 140 | 140 | 140 | 140 | 140 |
| Clay Mineral Filler | | 95 | 95 | 95 | 95 | 95 |
| Other Auxiliaries | | 5 | 5 | 5 | 5 | 5 |
| Test Results | | | | | | |
| 1. | Bending Strenth Half-Value Period (hours) | 920 | 950 | 1000 | 1200 | 1150 |
| 2. | Stiffness When Heated, Bending Angle (degrees) | 0 | 0 | 0 | 0 | 0 |

Table 1 (II)

| Blend Component (pts. wt.) | Example | | | | |
|---|---|---|---|---|---|
| | 6 | 7 | 8 | 9 | 10 |
| Novolak #2000 | 100 | 100 | 100 | 100 | 100 |
| Hexamethylenetetramine | 15 | 15 | 15 | 15 | 15 |
| Magnesium Oxide | 5 | 5 | - | 5 | - |
| Calcium Oxide | - | - | 5 | 5 | 5 |
| Resorcinol | 5 | 5 | - | 5 | - |
| 2-Mercaptobenzothiazole | - | - | - | 5 | 5 |
| 2,2′-Dithiobenzothiazole | - | - | - | - | - |
| 2-(4-Morpholinodithio)benzothiazole | - | - | - | - | - |
| Tetramethylthiuram Sulfide | - | - | - | - | - |
| 2,4,6-Trimercapto-1,3,5-triazine | - | - | - | - | - |
| Tributylamino-3,5-dimercaptotriazine | 5 | - | - | - | - |
| N-Oxydiethylene-2-benzothiazolylsulfeneamide | - | 5 | - | - | - |
| Copper Dimethyldithiocarbamate | - | - | 5 | - | - |
| Glass Fiber | 140 | 140 | 140 | 140 | 140 |
| Clay Mineral Filler | 95 | 95 | 95 | 95 | 95 |
| Other Auxiliaries | 5 | 5 | 5 | 5 | 5 |
| Test Results | | | | | |
| 1. Bending Strenth Half-Value Period (hours) | 850 | 1150 | 850 | 1150 | 940 |
| 2. Stiffness When Heated, Bending Angle (degrees) | 0 | 0 | 0 | 0 | 0 |

Table 1 (III)

| Blend Component (pts. wt.) | | Example | | Comp. Ex. | |
|---|---|---|---|---|---|
| | | 11 | 12 | 1 | 2 |
| Novolak #2000 | | 100 | 100 | 100 | |
| Hexamethylenetetramine | | 15 | 15 | 15 | |
| Magnesium Oxide | | - | 5 | 5 | |
| Calcium Oxide | | 5 | - | - | |
| Resorcinol | | - | - | 5 | |
| 2-Mercaptobenzothiazole | | - | - | - | |
| 2,2′-Dithiobenzothiazole | | - | - | - | |
| 2-(4-Morpholinodithio)benzothiazole | | 5 | - | - | |
| Tetramethylthiuram Sulfide | | - | - | - | |
| 2,4,6-Trimercapto-1,3,5-triazine | | - | 5 | - | |
| Tributylamino-3,5-dimercaptotriazine | | - | - | - | |
| N-Oxydiethylene-2-benzothiazolylsulfeneamide | | - | - | - | |
| Copper Dimethyldithiocarbamate | | - | - | - | |
| Glass Fiber | | 140 | 140 | 140 | |
| Clay Mineral Filler | | 95 | 95 | 95 | |
| Other Auxiliaries | | 5 | 5 | 5 | |
| Test Results | | | | | |
| 1. | Bending Strenth Half-Value Period (hours) | 970 | 1100 | 620 | 1100 |
| 2. | Stiffness When Heated, Bending Angle (degrees) | 0 | 0 | 0 | 60 |

Table 2 (I)

| Blend Component (pts. wt.) | | Example | | | | |
|---|---|---|---|---|---|---|
| | | 13 | 14 | 15 | 16 | 17 |
| Milex XL-225 | | 100 | 100 | 100 | 100 | 100 |
| Hexamethylenetetramine | | 8 | 8 | 8 | 8 | 8 |
| Magnesium Oxide | | 5 | 5 | 5 | 5 | 5 |
| Calcium Oxide | | - | - | - | - | - |
| Resorcinol | | 5 | 5 | 5 | 5 | 5 |
| 2-Mercaptobenzothiazole | | 5 | - | - | - | - |
| 2,2′-Dithiobenzothiazole | | - | 5 | - | - | - |
| 2-(4-Morpholinodithio)benzothiazole | | - | - | 5 | - | - |
| Tetramethylthiuram Sulfide | | - | - | - | 5 | - |
| 2,4,6-Trimercapto-1,3,5-triazine | | - | - | - | - | 5 |
| Tributylamino-3,5-dimercaptotriazine | | - | - | - | - | - |
| N-Oxydiethylene-2-benzothiazolylsulfeneamide | | - | - | - | - | - |
| Copper Dimethyldithiocarbamate | | - | - | - | - | - |
| Glass Fiber | | 140 | 140 | 140 | 140 | 140 |
| Clay Mineral Filler | | 95 | 95 | 95 | 95 | 95 |
| Other Auxiliaries | | 5 | 5 | 5 | 5 | 5 |
| Test Results | | | | | | |
| 1. | Bending Strenth Half-Value Period (hours) | 1600 | 1500 | 1650 | 1800 | 1700 |

Table 2 (II)

| Blend Component (pts. wt.) | | Example | | | | |
|---|---|---|---|---|---|---|
| | | 18 | 19 | 20 | 21 | 22 |
| Milex XL-225 | | 100 | 100 | 100 | 100 | 100 |
| Hexamethylenetetramine | | 8 | 8 | 8 | 8 | 8 |
| Magnesium Oxide | | 5 | 5 | - | 5 | - |
| Calcium Oxide | | - | - | 5 | 5 | 5 |
| Resorcinol | | 5 | 5 | - | 5 | - |
| 2-Mercaptobenzothiazole | | - | - | - | 5 | 5 |
| 2,2′-Dithiobenzothiazole | | - | - | - | - | - |
| 2-(4-Morpholinodithio)benzothiazole | | - | - | - | - | - |
| Tetramethylthiuram Sulfide | | - | - | - | - | - |
| 2,4,6-Trimercapto-1,3,5-triazine | | - | - | - | - | - |
| Tributylamino-3,5-dimercaptotriazine | | 5 | - | - | - | - |
| N-Oxydiethylene-2-benzothiazolylsulfeneamide | | - | 5 | - | - | - |
| Copper Dimethyldithiocarbamate | | - | - | 5 | - | - |
| Glass Fiber | | 140 | 140 | 140 | 140 | 140 |
| Clay Mineral Filler | | 95 | 95 | 95 | 95 | 95 |
| Other Auxiliaries | | 5 | 5 | 5 | 5 | 5 |
| Test Results | | | | | | |
| 1. | Bending Strenth Half-Value Period (hours) | 1350 | 1750 | 1300 | 1750 | 1500 |

Table 2 (III)

| Blend Component (pts. wt.) | Example | | Comp. Ex. | | | |
|---|---|---|---|---|---|---|
| | 23 | 24 | 3 | 4 | 5 | 6 * |
| Milex XL-225 | 100 | 100 | 100 | 100 | 100 | |
| Hexamethylenetetramine | 8 | 8 | 8 | 8 | 8 | |
| Magnesium Oxide | - | 5 | 5 | - | - | |
| Calcium Oxide | 5 | - | - | - | - | |
| Resorcinol | - | - | 5 | 5 | - | |
| 2-Mercaptobenzothiazole | - | - | - | 5 | 5 | |
| 2,2′-Dithiobenzothiazole | - | - | - | - | - | |
| 2-(4-Morpholinodithio)benzothiazole | - | - | - | - | - | |
| Tetramethylthiuram Sulfide | - | 5 | - | - | - | |
| 2,4,6-Trimercapto-1,3,5-triazine | - | - | - | - | - | |
| Tributylamino-3,5-dimercaptotriazine | 5 | - | - | - | - | |
| N-Oxydiethylene-2-benzothiazolylsulfeneamide | - | - | - | - | - | |
| Copper Dimethyldithiocarbamate | - | - | - | - | - | |
| Glass Fiber | 140 | 140 | 140 | 140 | 140 | |
| Clay Mineral Filler | 95 | 95 | 95 | 95 | 95 | |
| Other Auxiliaries | 5 | 5 | 5 | 5 | 5 | |
| Test Results | | | | | | |
| 1. Bending Strenth Half-Value Period (hours) | 1300 | 1700 | 1100 | 800 | 600 | 550 |

* Heat-resistant phenolic resin molding material Mektal HT-500 (made by ROGERS INC. in U.S.A.)

While the present invention has been described in connection with various preferred embodiments thereof, it is evident that other embodiments will be apparent to those skilled in the art from consideration of the specification and practice of the invention disclosed herein. Accordingly, it is intended that the scope of the invention be construed in accordance with the appended claims.

## Claims

1. A phenolic resin molding material, comprising a phenolic resin, an oxide of an alkaline earth metal and a sulfur compound.

2. The molding material according to claim 1, wherein the phenolic resin is selected from novolaks and resols.

3. The molding material according to claim 1, wherein the said phenolic resin is an aralkylphenolic resin produced by reacting a compound of the formula (1)

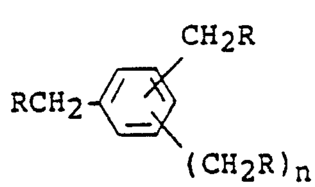

(1)

wherein R is selected from the group consisting of an alkoxy group having 1 to 6 carbon atoms, a carboxyl group having 2 to 6 carbon atoms, a chlorine atom, a bromine atom and an iodine atom, and n is 0 or 1, with a phenolic compound, an oxide of an alkaline earth metal and a sulfur compound in the presence of a catalyst

4. The molding material according to any of claims 1 to 3, wherein said oxide of an alkaline earth metal is at least one compound selected from the group consisting of magnesium oxide and calcium oxide.

5. The molding material according to any of claims 1 to 4, wherein the sulfur compound is at least one compound selected from thiazole compounds, thiuram compounds, triazine compounds, sulfeneamide compounds and dithioate compounds.

6. The molding material according to any of claims 1 to 5, further comprising resorcinol.

7. The molding material according to claim 6, wherein the resorcinol is present in an amount of from about 1 to about 10 parts by weight based on 100 parts by weight of said phenolic resin.

8. The molding material according to any of claims 1 to 7, wherein the said oxide of an alkaline earth metal and the sulfur compound are present in amounts of from about 1 to about 10 parts by weight and from about 1 to about 7 parts by weight, respectively, based on 100 parts by weight of the phenolic resin.

9. The molding material according to any of claims 1 to 8, further comprising at least one additional component selected from fillers, curing agents, curing accelerators, plasticizers, lubricants and pigments.

10. The molding material according to claim 3 or any claim dependent on claim 3, wherein the molar ratio of the phenolic compound to the compound of formula 1 is from about 1.3:1 to about 3:1.

11. The molding material according to claim 3 or any claim dependent on claim 3, wherein the catalyst employed in producing the said aralkylphenolic resin is selected from boron trifluoride, metallic chlorides, metallic sulfates, sodium bisulfate, dialkyl sulfates, sulfuric acid and p-toluenesulfonic acid.